# EUROPEAN PATENT APPLICATION

(11) **EP 2 922 210 A1**
(43) Date of publication of application: **23.09.2015**
(21) Application number: 15152629.0
(22) Date of filing: 27.01.2015
(51) Int. Cl.: H04B 1/034, H04B 1/04, H01Q 1/52, G01S 1/04

(54) **Improvements in and relating to wireless transmission mobile communication apparatuses**

(30) Priority: 18.03.2014 GB 201404858
(71) Applicant: Orolia Limited, Portsmouth PO3 5PB (GB)
(72) Inventor: Norrish, John, Portsmouth, Hampshire PO3 5PB (GB)
(74) Representative: Appleyard Lees

(57) **Abstract**

The present invention provides a wireless transmission mobile communication apparatus (20) comprising a power supply unit (34); a transmitter unit (22), comprising an antenna (26), which transmitter unit is powered by the power supply unit; a control unit (36) configured to control the operation of the apparatus; and an RF isolating unit (30).

## Description

### Field of the Invention

The present invention relates to wireless transmission mobile communication apparatuses.

### Background to the Invention

Within the field of wireless transmission mobile communication apparatuses, the present invention is particularly concerned with personal portable emergency radio beacons (PPERB's), which are typically deployed by personnel engaged in hazardous outdoor activities such as mountaineering, sailing, mountain biking, skiing, etc. If the participant in the outdoor activity encounters difficulty, the PPERB can be used to alert rescue services. When activated, the PPERB's use wireless communications to transmit a message to a rescue centre. The message typically contains the location of the PPERB device.

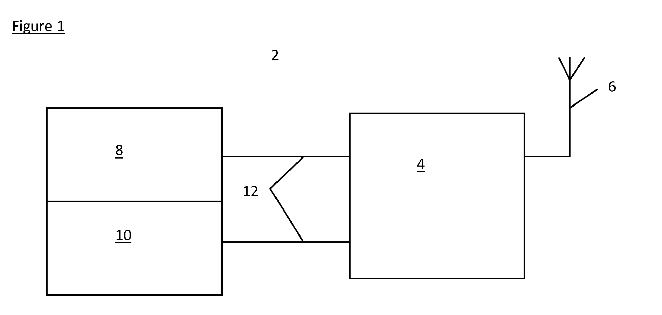

A PPERB device is generally worn by an individual. With reference to Figure 1 of the accompanying drawings, which shows a known PPERB device 2, it comprises a transmitter unit 4 containing the radio frequency (RF) circuitry for an antenna 6; a power supply unit 8; a control unit 10 and a connecting cable 12 between the transmitter unit 4 and the power supply unit 8.

In order to maximise the radiated output power from the antenna, the transmitter unit contains an antenna matching function to match the antenna impedance to the effective impedance of the rest of the PPERB device, the distributed system, which acts as a counterpoise to the antenna. This results in a matching problem for the distributed system as the effective impedance can vary according to how the distributed system is worn by the user and how closely the distributed system is coupled to the ground plane. Preferred embodiments of the present invention aim to address the problem referred to above.

### Summary of the Invention

According to the present invention there is provided a wireless transmission mobile communication apparatus comprising a power supply unit; a transmitter unit, comprising an antenna, which transmitter unit is powered by the power supply unit; a control unit configured to control the operation of the apparatus; and an RF isolating unit.

Suitably, the RF isolating unit is between the transmitter unit and the power supply unit.

Suitably, there is a connecting cable between the transmitter unit and the power supply unit.

Suitably, the isolating unit is at an interface between the transmitter unit and the connecting cable.

Suitably, the isolating unit comprises a plurality of inductors.

Suitably, the isolating unit comprises a first inductor and a second inductor, wherein the first inductor is located between the connecting cable and the RF transmitter, and the second inductor is located between connecting cable and the RF transmitter.

Suitably, the first inductor is rated between 1-40 µH, and more suitably between 5-20µH.

Suitably, the second inductor is rated between 1-40 µH, and more suitably between 5-20µH.

Suitably, the apparatus is a personal portable emergency radio beacon.

### Brief Description of the Drawings

The present invention will now be described, by way of example only, with reference to the drawings that follow; in which:
Figure 1 is a schematic illustration of a PPERB according to the prior art.
Figure 2 is a schematic illustration of a PPERB according to an embodiment of the present invention.
Figure 3 is a schematic illustration of the counterpoise isolator of the transmitter unit shown in Figure 2.

### Description of a Preferred Embodiment

At least some of the example embodiments described herein may be constructed, partially or wholly, using dedicated special-purpose hardware. Terms such as 'component', 'module' or 'unit' used herein may include, but are not limited to, a hardware device, such as circuitry in the form of discrete or integrated components, a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

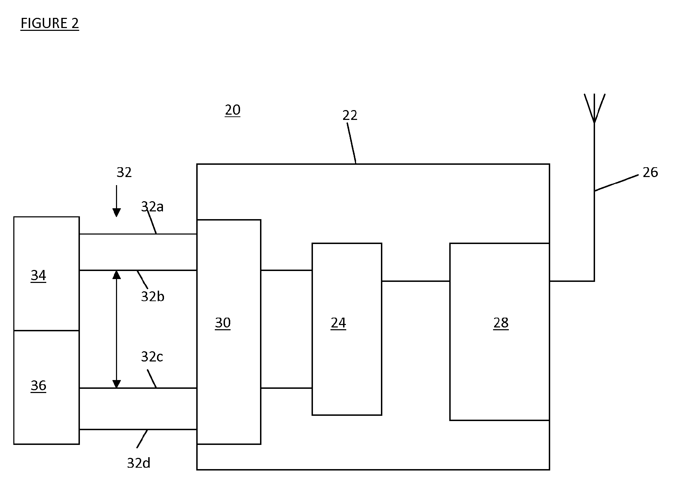

Referring to Figure 2 of the accompanying drawings there is shown a PPERB 20 comprising a transmitter unit 22 containing the radio frequency (RF) circuitry 24 for a RF antenna 26; an antenna matching circuit 28 and a counterpoise isolator 30. The counterpoise isolator 30 is an RF isolating unit. The PPERB 20 additionally comprises a connecting cable 32 between the transmitter unit 22 and a power supply unit 34 and control unit 36.

Connecting cable 32 consists of a power in line 32a, a power return line 32b, a data in line 32c and a data out line 32d. Power in line 32a and a power return line 32b run from the power supply unit 34 and the transmitter unit 22. Data in line 32c and data out line 32d run from the control unit 36 to the transmitter unit 22.

The counterpoise isolator 30 is located at the interface between the transmitter 22 and the connecting cable 32.

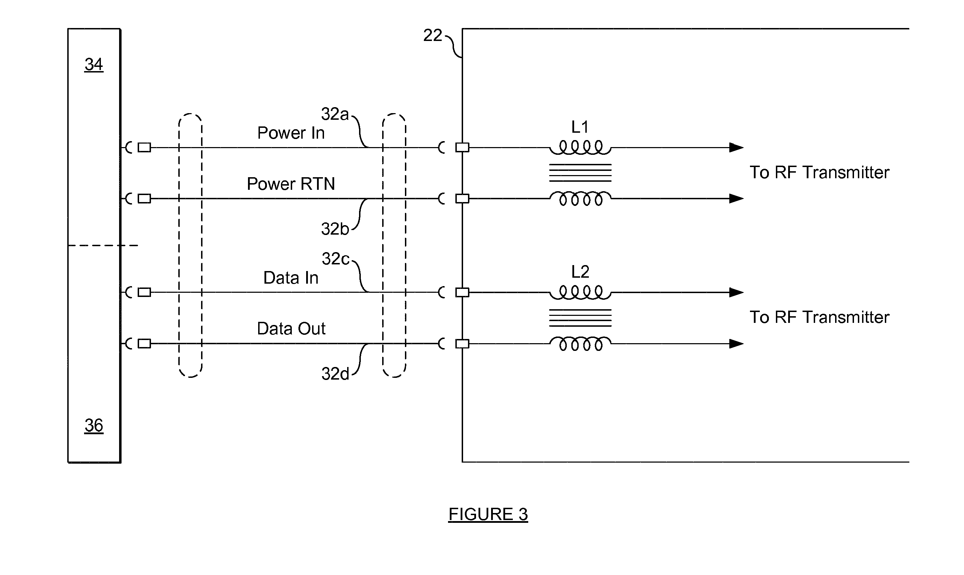

Referring to Figure 3 of the accompanying drawings there is shown the counterpoise isolator 30 in more detail.

The counterpoise isolator 30 comprises a first inductor L1 between the power lines 32a and 32b and the RF circuitry of the transmitter 22. The first inductor L1 is typically rated between 1-40 µH and preferably 5-20µH.

The counterpoise isolator further comprises a second inductor L2 between the data lines 30c and 30d and the RF circuitry of the transmitter 22. The second inductor L2 is typically rated between 1-40µH and preferably 5-20µH.

The first inductor L1 and the second inductor L2 provide the counterpoise isolation. This enables the antenna matching circuitry to better balance the antenna impedance in use even though the distributed system may vary the antenna counterpoise.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A wireless transmission mobile communication apparatus comprising a power supply unit; a transmitter unit, comprising an antenna, which transmitter unit is powered by the power supply unit; a control unit configured to control the operation of the apparatus; and an RF isolating unit; wherein there is a connecting cable between the transmitter unit and the power supply unit.

2. A wireless transmission mobile communication apparatus according to claim 1, wherein the RF isolating unit is between the transmitter unit and the power supply unit.

3. A wireless transmission mobile communication apparatus according to claim 1 or claim 2, wherein the isolating unit is at an interface between the transmitter unit and the connecting cable.

4. A wireless transmission mobile communication apparatus according to any preceding claim, wherein the isolating unit comprises a plurality of inductors.

5. A wireless transmission mobile communication apparatus according to claim 4, wherein the isolating unit comprises a first inductor and a second inductor, wherein the first inductor is located between the connecting cable and the RF transmitter, and the second inductor is located between the connecting cable and the RF transmitter.

6. A wireless transmission mobile communication apparatus according to claim5, wherein the first inductor is rated between 1-40µH.

7. A wireless transmission mobile communication apparatus according to claim 6, wherein the first inductor is rated between 5-20µH.

8. A wireless transmission mobile communication apparatus according to any one of claims 5-7, wherein the second inductor is rated between 1-50µH.

9. A wireless transmission mobile communication apparatus according to claim 8, wherein the second inductor is rated between 5-20µH

10. A wireless transmission mobile communication apparatus according to any preceding claim, wherein the apparatus is a personal portable emergency radio beacon.
